# EUROPEAN PATENT APPLICATION

(11) **EP 4 379 647 A1**
(43) Date of publication of application: **05.06.2024**
(21) Application number: 22874974.3
(22) Date of filing: 28.09.2022
(51) Int. Cl.: G06T 1/20

(54) **RENDER FORMAT SELECTION METHOD AND DEVICE RELATED THERETO**

(30) Priority: 29.09.2021 CN 202111155620
(71) Applicant: Huawei Technologies Co., Ltd., Shenzhen, Guangdong 518129 (CN)
(72) Inventor: JIANG, Zecheng, Shenzhen, Guangdong 518129 (CN); DENG, Yixin, Shenzhen, Guangdong 518129 (CN); SHANG, Qin, Shenzhen, Guangdong 518129 (CN)
(74) Representative: Körber, Martin Hans
(86) International application number: PCT/CN2022/122060
(87) International publication number: WO 2023/051590

(57) **Abstract**

A method for selecting a render format is provided. The method includes: obtaining a first rendering instruction set; transferring first render format change information to a GPU based on that the first rendering instruction set does not include an instruction for drawing a transparent object, and that a current render format is a first render format, so that the GPU draws an object of a second frame based on the first render format change information, where the first render format includes a transparency channel, the first render format change information is used to indicate to change the first render format to a second render format, and the second render format does not include a transparency channel. According to the method, when the second frame is rendered, the GPU may use the second render format that does not include a transparency channel, to reduce DDR overheads.

## Description

This application claims priority to Chinese Patent Application No. 202111155620.9, filed with the China National Intellectual Property Administration on September 29, 2021 and entitled "METHOD FOR SELECTING RENDER FORMAT AND RELATED DEVICE THEREOF", which is incorporated herein by reference in its entirety.

### TECHNICAL FIELD

This application relates to the field of computers, and in particular, to a method for selecting a render format and a related device thereof.

### BACKGROUND

Bottlenecks of game performance and power consumption are threefold: central processing unit (central processing unit, CPU), graphics processing unit (graphics processing unit, GPU), and double data rate synchronous dynamic random access memory (double data rate synchronous dynamic random access memory, DDR). Currently, image quality of games is becoming increasingly exquisite. Rendering of exquisite image quality requires more render passes (Render Pass), such as rendering various special effects. In addition, rendering resolution of games is increasing. As a result, a DDR bandwidth requirement is higher, and consequently a DDR becomes a performance bottleneck.

A render target format (render target format, which may be referred to as Render Format for short, or a render format) is used to describe how many bits are allocated to each pixel, and how the pixels are divided in a red channel (R channel), a green channel (G channel), a blue channel (B channel), and an alpha transparency channel (A channel). For example, when RGBA8 is used, 32 bits are allocated to each pixel, and red, green, and alpha occupies 8 bits separately.

Currently, there are two technologies for selecting a render format. One is that a game engine selects a render format suitable for a game during game development, and the other is that some applications (application, APP) select a render format matching graphics quality to be processed. However, regardless of whether selection is performed during game development or before the game is run, a render format is always used during game running, resulting in poor image quality or performance of the game.

### SUMMARY

According to a first aspect, this application provides a method for selecting a render format. The method is applied to a terminal device, the terminal device includes a graphics processing unit GPU, and the method includes:
obtaining a first rendering instruction set, where the first rendering instruction set is used to draw an object of a first frame; and
transferring first render format change information to the GPU based on that the first rendering instruction set does not include an instruction for drawing a transparent object, and that a current render format is a first render format, so that the GPU draws an object of a second frame based on the first render format change information, where the first render format includes a transparency channel, the first render format change information is used to indicate to change the first render format to a second render format, the second render format does not include a transparency channel, and the second frame is a frame after the first frame.

In a possible implementation, the current render format is the first render format, and the first render format may include an R channel, a G channel, a B channel, and an A channel. For example, the first render format may be RGBA8 or RGBA16F.

In a possible implementation, a transparent feature of a rendering instruction in the first rendering instruction set may be detected. If the first rendering instruction set does not include the instruction for drawing a transparent object, it may be considered that rendering of a transparent object does not need to be currently performed, and a render format that includes a transparency channel does not need to be included. On the contrary, if rendering is performed by using a render format that includes a transparency channel, DDR overheads during rendering task execution are increased without increasing image quality.

For example, the transparent feature of the rendering instruction in the first rendering instruction set may be determined based on the following instruction feature. For example, whether an instruction such as Disable(GL_BLEND) exists in a main scenario RenderPass instruction is determined, so that whether to draw a transparent object is determined. A decision result is made based on feature information. For example, if Disable(GL_BLEND) is invoked for a frame N (that is, the first frame), it may be considered that the first rendering instruction set does not include the instruction for drawing a transparent object.

In this embodiment of this application, a transparent feature of a rendering instruction of the first frame is used as a reference for selecting a render format of the second frame. When the first rendering instruction set does not include the instruction for drawing a transparent object, it may be considered that a transparent object does not need to be rendered in the second frame. However, when the current render format is the first render format (which includes a transparency channel). If the second frame is still rendered based on the first render format, unnecessary DDR overheads are increased.

Therefore, when the second frame is rendered, a second render format that does not include a transparency channel needs to be used. For example, the second render format may be R11G11B10F.

In a possible implementation, a CPU needs to transfer, to the GPU, the first render format change information that indicates to change the first render format to the second render format, so that a render format used when the GPU renders the second frame is changed from the first render format to the second render format.

In a possible implementation, the second frame is the frame after the first frame.

For example, the CPU may detect a render format and a transparent feature of the frame N (that is, the foregoing first frame), so that whether to draw a transparent object is determined based on the transparent feature based on the following instruction feature, for example, whether an instruction such as Disable/Enable (GL_BLEND), BlendEquation or BlendFunc exists in the main scenario RenderPass instruction. A decision result is made based on feature information. For example, if the frame N invokes Disable(GL_BLEND) and the render format is RGBA16F, a decision for dynamically switching a render format of a frame N+1 (that is, the foregoing second frame) is made, and the RGBA16F format is switched to the R11G11B10 format. The frame N+1 is drawn based on the new R11G11B10 render format.

An embodiment of this application provides a method for selecting a render format. The method includes: obtaining a first rendering instruction set, where the first rendering instruction set is used to draw an object of a first frame; and transferring first render format change information to a GPU based on that the first rendering instruction set does not includes an instruction for drawing a transparent object, and that a current render format is a first render format, so that the GPU draws an object of a second frame based on the first render format change information, where the first render format includes a transparency channel, the first render format change information is used to indicate to change the first render format to a second render format, the second render format does not includes a transparency channel, and the second frame is a frame after the first frame. A transparent feature of a rendering instruction of the first frame is used as a reference for selecting a render format of the second frame. When the first rendering instruction set does not include the instruction for drawing a transparent object, it may be considered that a transparent object does not need to be rendered in the second frame. However, when the current render format is the first render format (which includes a transparency channel). If the second frame is still rendered based on the first render format, unnecessary DDR overheads are increased. Therefore, when the second frame is rendered, the GPU may use the second render format that does not include a transparency channel, to reduce DDR overheads.

According to a second aspect, this application provides a method for selecting a render format. The method is applied to a terminal device, the terminal device includes a graphics processing unit GPU, and the method includes:
obtaining a first rendering instruction set, where the first rendering instruction set is used to draw an object of a first frame; and
transferring second render format change information to the GPU based on that the first rendering instruction set includes an instruction for drawing a transparent object, and that a current render format is a second render format, so that the GPU draws an object of a second frame based on the second render format change information, where the second render format does not include a transparency channel, the second render format change information is used to indicate to change the second render format to a first render format, the first render format includes a transparency channel, and the second frame is a frame after the first frame.

In a possible implementation, the current render format is the second render format, the second render format does not include a transparency channel, and the second render format may include an R channel, a G channel, and a B channel. For example, the second render format may beR11G11B10F.

In a possible implementation, a transparent feature of a rendering instruction in the first rendering instruction set may be detected. If the first rendering instruction set includes the instruction for drawing a transparent object, it may be considered that rendering of a transparent object needs to be performed currently, and a render format that includes a transparency channel also needs to be included. On the contrary, if a render format that does not include a transparency channel is used for rendering, image quality of rendering is greatly reduced.

For example, the transparent feature of the rendering instruction in the first rendering instruction set may be determined based on the following instruction feature. For example, whether an instruction such as Enable (GL_BLEND), BlendEquation or BlendFunc exists in a main scenario RenderPass instruction is determined, so that whether to draw a transparent object is determined. A decision result is made based on feature information. For example, if Enable (GL_BLEND) is invoked for a frame N (that is, the first frame), it may be considered that the first rendering instruction set includes an instruction for drawing a transparent object.

In this embodiment of this application, a transparent feature of a rendering instruction of the first frame is used as a reference for selecting a render format of the second frame. When the first rendering instruction set includes the instruction for drawing a transparent object, it may be considered that a transparent object needs to be rendered in the second frame. However, when the current render format is the second render format (which does not include a transparency channel). If the second frame is still rendered based on the second render format, rendered image quality is greatly reduced.

Therefore, when the second frame is rendered, the first render format that includes a transparency channel needs to be used, and the first render format may include an R channel, a G channel, a B channel, and an A channel. For example, the first render format may be RGBA8 or RGBA16F.

In a possible implementation, the CPU needs to transfer, to the GPU, the second render format change information that indicates to change the second render format to the first render format, so that a render format used when the GPU renders the second frame is changed from the second render format to the first render format.

In a possible implementation, the second frame is the frame after the first frame.

For example, the CPU may detect a render format and a transparent feature of the frame N (that is, the foregoing first frame), so that whether to draw a transparent object is determined based on the transparent feature based on the following instruction feature, for example, whether an instruction such as Disable/Enable (GL_BLEND), BlendEquation or BlendFunc exists in the main scenario RenderPass instruction. A decision result is made based on feature information. For example, if the frame N invokes Enable (GL_BLEND) and the render format is R11G11B10, a decision for dynamically switching a render format of a frame N+1 (that is, the second frame) is made, and the R11G11B10 is switched to the RGBA16F format. The frame N+1 is drawn based on the new RGBA16F render format.

An embodiment of this application provides a method for selecting a render format. The method is applied to a terminal device, the terminal device includes a graphics processing unit GPU, and the method includes: obtaining a first rendering instruction set, where the first rendering instruction set is used to draw an object of a first frame; and transferring second render format change information to the GPU based on that the first rendering instruction set includes an instruction for drawing a transparent object, and that a current render format is a second render format, so that the GPU draws an object of a second frame based on the second render format change information, where the second render format does not include a transparency channel, the second render format change information is used to indicate to change the second render format to a first render format, the first render format includes a transparency channel, and the second frame is a frame after the first frame. A transparent feature of a rendering instruction of the first frame is used as a reference for selecting a render format of the second frame. When the first rendering instruction set includes the instruction for drawing a transparent object, it may be considered that a transparent object needs to be rendered in the second frame. However, when the current render format is the second render format (which does not include a transparency channel). If the second frame is still rendered based on the second render format, rendered image quality is greatly reduced. Therefore, in this application, when the second frame is rendered, the first render format that includes a transparency channel needs to be used, so that image quality of rendering can be improved.

It should be understood that there is a difference in pixel value representation precision between different render formats that include a transparency channel. For example, 32 bits are allocated to each pixel in RGBA8, and red, green, and blue and transparency each occupy 8 bits; and 64 bits are allocated to each pixel in RGBA16F, and red, green, and blue and transparency each occupy 16 bits. That is, a pixel value representation precision supported by RGBA16F is greater than a pixel value representation precision supported by RGBA8.

In a possible implementation, there may be a case in which a pixel value representation precision required by rendered image quality is higher than a pixel value representation precision supported by the current render format. In this case, the render format needs to be changed to a render format that supports a higher pixel value representation precision, to improve rendered image quality.

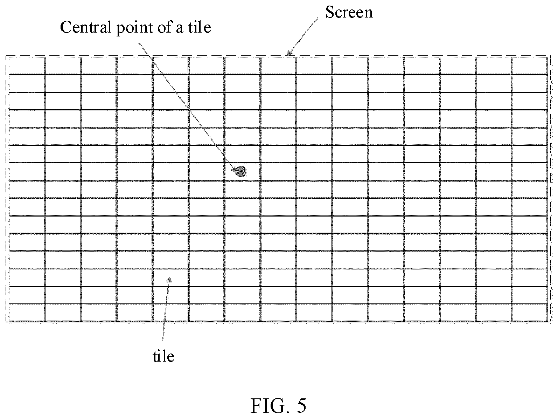

In a possible implementation, a drawing result of the second frame may be obtained. The drawing result may include a value of each channel of each pixel in a rendering interface, or a rendering interface may be divided into a plurality of tile areas (for details, refer to FIG. 5), and the drawing result may include a value of each channel of one or more pixels (for example, a central point) in each tile in the rendering interface. The CPU may determine, based on the drawing result, whether the current render format meets a pixel value representation precision required by the second frame. Specifically, it may be determined whether there is a pixel whose pixel value is equal to a pixel value representation precision upper limit. If there is a pixel (or there are a plurality of pixels) whose pixel value is equal to the pixel value representation precision upper limit, it may be considered that the drawing result indicates that the second frame includes a pixel whose required pixel value representation precision exceeds a pixel value representation precision upper limit supported by the first render format.

In a possible implementation, third render format change information may be transferred to the GPU if the drawing result indicates that the second frame includes a pixel whose required pixel value representation precision exceeds a pixel value representation precision upper limit supported by the first render format, so that the GPU draws an object of a third frame based on the third render format change information, where the third render format change information is used to indicate to change the first render format to a third render format, a pixel value representation precision upper limit supported by the third render format is greater than the pixel value representation precision upper limit supported by the first render format, and the third frame is a frame after the second frame.

In a possible implementation, the second render format is RGBA8, and the third render format is RGBA16F.

For example, RGBA8 may be switched to RGBA16F, and the frame N is mapped to the Render Buffer. For example, 1920*1080 Render Buffer is divided into 253 tiles of 128*64, and a center value of each tile is read from a GPU memory, and whether the value is equal to 255 is determined. If there are a plurality of values equal to 255, it is considered that there is a highlight area, and the RGBA8 render format cannot meet an image quality rendering requirement, and RGBA8 needs to be switched to RGBA16F.

In a possible implementation, there may be a case in which a pixel value representation precision required by rendered image quality is lower than a pixel value representation precision supported by the current render format. In this case, the render format needs to be changed to a render format that supports a lower pixel value representation precision, to reduce DDR overheads.

In a possible implementation, the method includes: obtaining a drawing result of the second frame; and transferring fourth render format change information to the GPU based on that the drawing result indicates that the second frame does not includes a pixel whose required pixel value representation precision exceeds a pixel value representation precision upper limit supported by the first render format, so that the GPU draws an object of a third frame based on the fourth render format change information, where the fourth render format change information is used to indicate to change the first render format to a fourth render format, a pixel value representation precision upper limit supported by the fourth render format is less than the pixel value representation precision upper limit supported by the first render format, and the third frame is a frame after the second frame.

In a possible implementation, the third render format is RGBA16F, and the second render format is RGBA8.

According to a third aspect, this application provides an apparatus for selecting a render format. The apparatus is applied to a terminal device, the terminal device includes a graphics processing unit GPU, and the apparatus includes:
an instruction obtaining module, configured to obtain a first rendering instruction set, where the first rendering instruction set is used to draw an object of a first frame; and
an instruction format conversion module, configured to transfer first render format change information to the GPU based on that the first rendering instruction set does not include an instruction for drawing a transparent object, and that a current render format is a first render format, so that the GPU draws an object of a second frame based on the first render format change information, where the first render format includes a transparency channel, the first render format change information is used to indicate to change the first render format to a second render format, the second render format does not include a transparency channel, and the second frame is a frame after the first frame.

In a possible implementation, the first render format includes an R channel, a G channel, a B channel, and an A channel, and the second render format includes an R channel, a G channel, and a B channel.

In a possible implementation, the first render format is RGBA8 or RGBA16F, and the second render format is R11G11B10F.

In a possible implementation, the second frame is the frame after the first frame.

According to a fourth aspect, this application provides an apparatus for selecting a render format. The apparatus is applied to a terminal device, the terminal device includes a graphics processing unit GPU, and the apparatus includes:
an instruction obtaining module, configured to obtain a first rendering instruction set, where the first rendering instruction set is used to draw an object of a first frame; and
an instruction format conversion module, configured to transfer second render format change information to the GPU based on that the first rendering instruction set includes an instruction for drawing a transparent object, and that a current render format is a second render format, so that the GPU draws an object of a second frame based on the second render format change information, where the second render format does not include a transparency channel, the second render format change information is used to indicate to change the second render format to a first render format, the first render format includes a transparency channel, and the second frame is a frame after the first frame.

In a possible implementation, the first render format includes an R channel, a G channel, a B channel, and an A channel, and the second render format includes an R channel, a G channel, and a B channel.

In a possible implementation, the first render format is RGBA8 or RGBA16F, and the second render format is R11G11B10F.

In a possible implementation, the instruction obtaining module is further configured to obtain a drawing result of the second frame; and
the instruction format conversion module is further configured to: transfer third render format change information to the GPU based on that the drawing result indicates that the second frame includes a pixel whose required pixel value representation precision exceeds a pixel value representation precision upper limit supported by the first render format, so that the GPU draws an object of a third frame based on the third render format change information, where the third render format change information is used to indicate to change the first render format to a third render format, a pixel value representation precision upper limit supported by the third render format is greater than the pixel value representation precision upper limit supported by the first render format, and the third frame is a frame after the second frame.

In a possible implementation, the second render format is RGBA8, and the third render format is RGBA16F.

In a possible implementation, the instruction obtaining module is further configured to obtain a drawing result of the second frame; and
the instruction format conversion module is further configured to transfer fourth render format change information to the GPU based on that the drawing result indicates that the second frame does not include a pixel whose required pixel value representation precision exceeds a pixel value representation precision upper limit supported by the first render format, so that the GPU draws an object of a third frame based on the fourth render format change information, where the fourth render format change information is used to indicate to change the first render format to a fourth render format, a pixel value representation precision upper limit supported by the fourth render format is less than the pixel value representation precision upper limit supported by the first render format, and the third frame is a frame after the second frame.

In a possible implementation, the third render format is RGBA16F, and the second render format is RGBA8.

According to a fifth aspect, this application provides a terminal device. The terminal device includes a processor and a memory. The processor obtains code stored in the memory, to perform any one of the first aspect and the optional implementations of the first aspect, and any one of the second aspect and the optional implementations of the second aspect.

According to a sixth aspect, this application provides a non-volatile computer-readable storage medium. The non-volatile computer-readable storage medium includes computer instructions used to perform the method according to any one of the first aspect and the optional implementations of the first aspect, and the method according to any one of the second aspect and the optional implementations of the second aspect.

According to a seventh aspect, this application further provides a computer program product. The computer program product includes computer instructions. A processor of a host device executes the computer instructions, to perform an operation performed by a processor in any one of the possible implementations of this embodiment.

An embodiment of this application provides a method for selecting a render format. The method includes: obtaining a first rendering instruction set, where the first rendering instruction set is used to draw an object of a first frame; and transferring first render format change information to a GPU based on that the first rendering instruction set does not includes an instruction for drawing a transparent object, and that a current render format is a first render format, so that the GPU draws an object of a second frame based on the first render format change information, where the first render format includes a transparency channel, the first render format change information is used to indicate to change the first render format to a second render format, the second render format does not includes a transparency channel, and the second frame is a frame after the first frame. A transparent feature of a rendering instruction of the first frame is used as a reference for selecting a render format of the second frame. When the first rendering instruction set does not include the instruction for drawing a transparent object, it may be considered that a transparent object does not need to be rendered in the second frame. However, when the current render format is the first render format (which includes a transparency channel). If the second frame is still rendered based on the first render format, unnecessary DDR overheads are increased. Therefore, when the second frame is rendered, the GPU may use the second render format that does not include a transparency channel, to reduce DDR overheads.

### BRIEF DESCRIPTION OF DRAWINGS

FIG. 1a is a schematic diagram of an architecture of a system;
FIG. 1b is a schematic diagram of an architecture of a system;
FIG. 1c is a schematic diagram of an architecture of a system;
FIG. 2 is a block diagram of a computing apparatus of a technology described in an embodiment of this application;
FIG. 3 is a schematic flowchart of a method for selecting a render format according to an embodiment of this application;
FIG. 4 is a schematic flowchart of a method for selecting a render format according to an embodiment of this application;
FIG. 5 is a schematic diagram of a rendering result according to an embodiment of this application;
FIG. 6 is a schematic flowchart of a method for selecting a render format according to an embodiment of this application;
FIG. 7 is a schematic diagram of an apparatus for selecting a render format according to an embodiment of this application;
FIG. 8 is a schematic diagram of an apparatus for selecting a render format according to an embodiment of this application; and
FIG. 9 is a schematic diagram of a structure of a terminal device according to this application.

### DESCRIPTION OF EMBODIMENTS

The following describes embodiments of this application with reference to accompanying drawings. It is clear that the described embodiments are merely some but not all of embodiments of this application. Persons of ordinary skill in the art may learn that, with development of technologies and emergence of a new scenario, the technical solutions provided in embodiments of this application are also applicable to a similar technical problem.

In the specification, the claims, and the accompanying drawings of this application, the terms "first", "second", and the like are intended to distinguish between similar objects but do not necessarily indicate a specific order or sequence. It should be understood that the data termed in such a way is interchangeable in proper circumstances so that embodiments of the present invention described herein can be implemented in orders other than the order illustrated or described herein. In addition, the terms "include", "have" and any other variants mean to cover non-exclusive inclusion, for example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved.

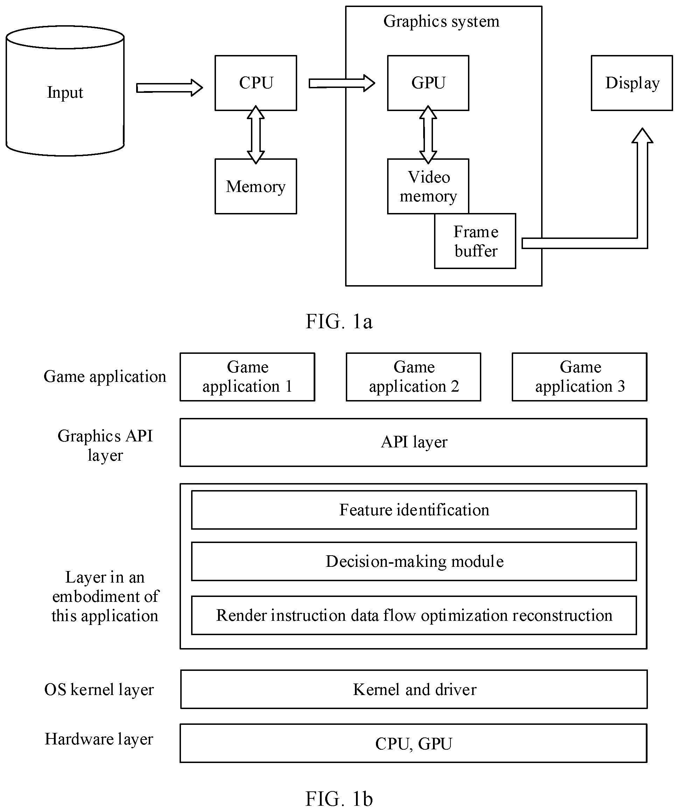

As shown in FIG. 1a, a client program needs to invoke an API interface to implement 3D rendering. A rendering command and data are cached in a random access memory (random access memory, RAM). Under a specific condition, the commands and data are sent to a video random access memory (video random access memory, VRAM) by using a CPU clock. Under control of a GPU, the data and the commands in the VRAM are used to complete graphics rendering, and a result is stored in a frame buffer. Finally, a frame in the frame buffer is sent to a display, and the result is displayed. In a modern graphics hardware system, data can be directly sent from a RAM to a VRAM without using a CPU clock or directly sent from a frame buffer to the RAM (for example, a VBO and a PBO in an OpenGL).

This application may be applied to an image rendering process of a game application. FIG. 1b is a schematic diagram of software and hardware modules according to an embodiment of this application and locations of the software and hardware modules in a technology stack. The architectural diagram is a typical scenario of game rendering on an intelligent device. In the architectural diagram, feature identification, a decision-making module, and a rendering instruction reconstruction module are mainly included.

Program code in embodiments of this application may exist at a Framework layer of Android platform software, and is between the Framework and DDK.

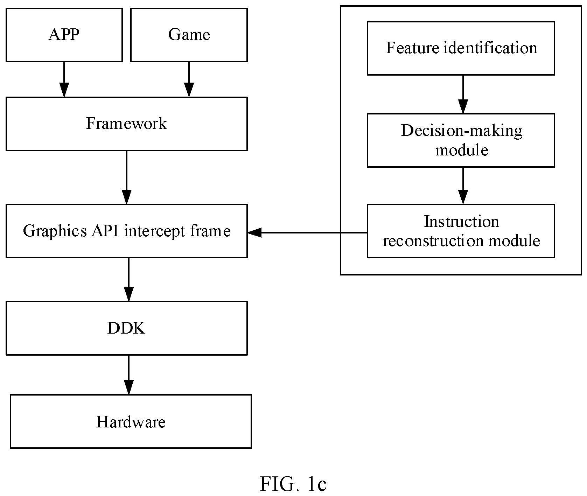

In this application, feature identification is first performed based on a plurality of dimensions, for example, whether Render Pass renders a transparent object, and whether a realtime rendered image quality feature matches Render Format. After a rendering instruction stream of a game/APP is intercepted, the feature identification module performs feature analysis, makes a decision after analyzing whether there is a matched feature, and performs instruction reconstruction based on a decision result. FIG. 1c is a schematic diagram of an implementation of this application.

The following describes a schematic diagram of a system architecture according to an embodiment of this application.

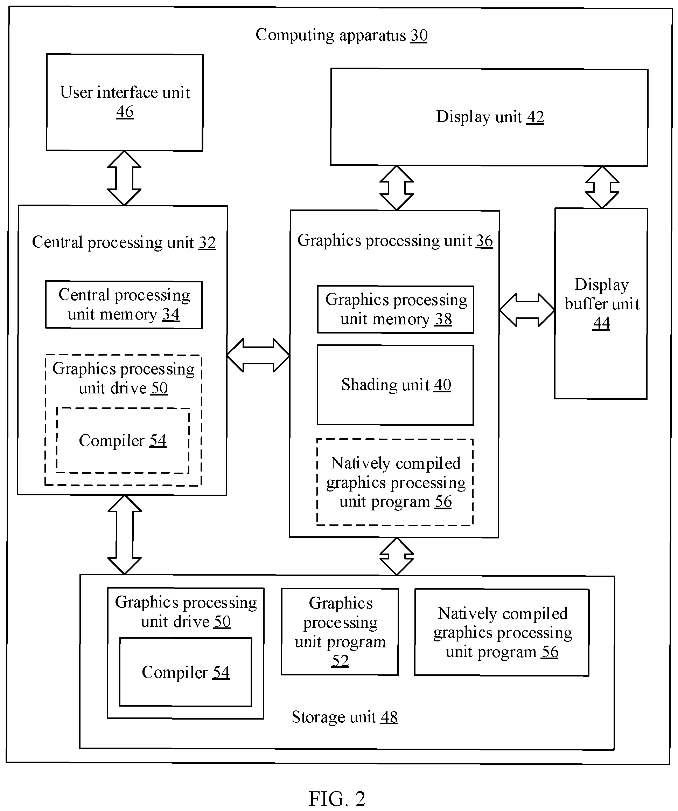

FIG. 2 is a block diagram illustrating a computing apparatus 30 that may implement the technologies described in the present invention. The computing apparatus 30 may be a rendering instruction processing apparatus in this embodiment of this application. An example of the computing apparatus 30 includes but is not limited to a wireless apparatus, a mobile or cellular phone (including a smartphone), a personal digital assistant ( personal digital assistant, PDA), a video game control console that includes a video display, a mobile video game apparatus, a mobile video conference unit, a laptop computer, a desktop computer, a television set-top box, a tablet computing apparatus, e-book reader, fixed or mobile media player, or the like.

In the example shown in FIG. 2, the computing apparatus 30 includes a central processing unit (central processing unit, CPU) 32 that includes a CPU memory 34, a graphics processing unit (graphics processing unit, GPU) 36 that includes a GPU memory 38 and one or more shading units 40, a display unit 42, a display buffer unit 44, a user interface unit 46, and a storage unit 48. In addition, the storage unit 48 may store a GPU driver 50 that includes a compiler 54, a GPU program 52, and a natively compiled GPU program 56.

An example of the CPU 32 includes but is not limited to a digital signal processor (DSP), a general-purpose microprocessor, an application-specific integrated circuit (ASIC), a field programmable logic array (FPGA), or another equivalent integrated or discrete logic circuit. Although the CPU 32 and the GPU 36 are illustrated as separate units in the example shown in FIG. 2, in some examples, the CPU 32 and the GPU 36 may alternatively be integrated into a single unit. The CPU 32 may execute one or more applications. An example of the application may include a web browser, an email application, a spreadsheet, a video game, an audio and/or video capture, playback, or editing application, or another application that starts up with image data to be presented by using the display unit 42.

In the example shown in FIG. 2, the CPU 32 includes the CPU memory 34. The CPU memory 34 may represent an on-chip storage device or memory used when executing machine or object code. The CPU memory 34 may separately include a hardware memory register capable of storing a fixed quantity of digital bits. The CPU 32 may be capable of reading a value from the local CPU memory 34 or write a value to the local CPU memory 34 more quickly than reading a value from the storage unit 48 (for example, which may be accessed by using a system bus) or writing a value to the storage unit 48.

The GPU 36 represents one or more dedicated processors used to perform graphics operations. That is, for example, the GPU 36 may be a dedicated hardware unit with a fixed function and a programmable component for rendering graphics and executing a GPU application. The GPU 36 may further include a DSP, a general-purpose microprocessor, an ASIC, an FPGA, or another equivalent integrated or discrete logic circuit.

The GPU 36 further includes a GPU memory 38, which may represent an on-chip storage device or memory used when executing machine or object code. The GPU memory 38 may separately include a hardware memory register capable of storing a fixed quantity of digital bits. The GPU 36 may be capable of reading a value from the local GPU memory 38 or write a value to the local GPU memory 38 more quickly than reading a value from the storage unit 48 (for example, which may be accessed by using the system bus) or writing a value to the storage unit 48.

The GPU 36 further includes the shading unit 40. As described in more detail below, the shading unit 40 may be configured as a programmable pipeline of a processing component. In some examples, the shading unit 40 may be referred to as a "shader processor" or a "unified shader", and may perform shading operations in geometric shapes, vertices, pixels, or the like to render graphics. The shading unit 40 may include one or more components in FIG. 2 that are not specifically shown for clarity, such as components for fetching and decoding instructions, one or more arithmetic and logic units (arithmetic and logic unit, ALU) for performing arithmetic calculations, and one or more memories, caches, or registers.

The display unit 42 represents a unit capable of displaying video data, images, text, or any other type of data. The display unit 42 may include a liquid crystal display (liquid crystal display, LCD), a light-emitting diode (light-emitting diode, LED) display, an organic LED (organic light-emitting diode, OLED), an active-matrix OLED (active-matrix organic light-emitting diode, AMOLED) display, and the like.

The display buffer unit 44 represents a memory or storage apparatus dedicated to storing data for the display unit 42 for presenting an image (for example, a photo or a video frame). The display buffer unit 44 may represent a two-dimensional buffer that includes a plurality of storage locations. A quantity of the storage locations in the display buffer unit 44 may be substantially similar to a quantity of pixels to be displayed on the display unit 42. For example, if the display unit 42 is configured to include 640*480 pixels, the display buffer unit 44 may include 640*480 storage locations. The display buffer unit 44 may store a final pixel value for each pixel processed by the GPU 36. The display unit 42 may search the final pixel values from the display buffer unit 44 and display a final image based on the pixel value stored in the display buffer unit 44.

The user interface unit 46 represents a unit that may be used by a user to interact with another unit (for example, the CPU 32) of the computing apparatus 30 or interface in another manner to communicate with another unit of the computing apparatus 30. Examples of the user interface unit 46 include but are not limited to a trackball, a mouse, a keyboard, and other types of input apparatuses. The user interface unit 46 may alternatively be a touchscreen, and may be integrated as a part of the display unit 42.

The storage unit 48 may include one or more computer-readable storage media. An example of the storage unit 48 includes but is not limited to a random access memory (RAM), a read-only memory (ROM), an electrically erasable programmable read-only memory (EEPROM), a CD-ROM or another optical disc storage apparatus, a magnetic disk storage apparatus or another magnetic storage apparatus, a flash memory, or any other medium that can be used to store expected program code in a form instructions or a data structure and that can be accessed by a computer or a processor.

In some example implementation solutions, the storage unit 48 may include instructions that enable the CPU 32 and/or the GPU 36 to execute the function of the CPU 32 and the GPU 36 in the present invention. In some examples, the storage unit 48 may be considered as a non-transitory storage medium. The term "non-transitory" may indicate that the storage medium is not represented in a carrier or a propagation signal. However, the term "non-transitory" should not be construed as meaning that the storage unit 48 cannot be moved. In an example, the storage unit 48 may be removed from the computing apparatus 30 and moved to another apparatus. In another example, a storage unit basically similar to the storage unit 48 may be inserted into the computing apparatus 30. In some examples, the non-transitory storage medium may store data that may change over time (for example, in a RAM).

The storage unit 48 stores the GPU driver 50, the compiler 54, the GPU program 52, and the natively compiled GPU program 56. The GPU driver 50 represents a computer program or executable code that provides an interface for accessing the GPU 36. The CPU 32 executes the GPU driver 50 or several portions thereof to connect to the GPU 36, and for this reason, the GPU driver 50 is shown in the example shown in FIG. 2 as a GPU driver 50 marked with a dashed box in the CPU 32. The GPU driver 50 may access a program or another executable file executed by the CPU 32, including the GPU program 52.

The GPU program 52 may include code written in a high-level (HL) programming language (for example, by using an application programming interface (API)). An example of the API includes an open graphics library (OpenGL). In general, the API includes pre-specified standardized groups of commands executed by associated hardware. API commands allow users to instruct a GPU hardware component to execute a command without learning of a specific condition of the hardware component.

The GPU program 52 may invoke or include, in another manner, one or more functions provided by the GPU driver 50. The CPU 32 generally executes a program embedded in the GPU program 52, and immediately transfers the GPU program 52 to the GPU driver 50 (for example, in a form of a command stream) after encountering the GPU program 52. In this context, the CPU 32 executes the GPU driver 50 to process the GPU program 52. For example, the GPU driver 50 may process the GPU program 52 by compiling the GPU program into an executable object or machine code of the GPU 36. This object code is shown in the example shown in FIG. 2 as the natively compiled GPU program 56.

In some examples, the compiler 54 may operate in real time or near real time to compile the GPU program 52 during execution of a program in which the GPU program 52 is embedded. For example, the compiler 54 generally represents a module that streamlines HL instructions defined according to the HL programming language into LL instructions in a low-level (LL) programming language. After compilation, these LL instructions can be executed by a specific type of processor or other types of hardware (such as an FPGA, an ASIC, and the like, including, for example, the CPU 32 and the GPU 36).

In the example shown in FIG. 2, the compiler 54 may receive the GPU program 52 from the CPU 32 when executing HL code that includes the GPU program 52. The compiler 54 may compile the GPU program 52 into the natively compiled GPU program 56 that is compatible with the LL programming language. The compiler 54 then outputs the natively compiled GPU program 56 that includes the LL instructions.

The GPU 36 generally receives the natively compiled GPU program 56 (for example, shown by a "natively compiled GPU program 56" marked by a dashed-line box in the GPU 36). After that, in some examples, the GPU 36 immediately renders an image and outputs a rendered part of the image to the display buffer unit 44. For example, the GPU 36 may generate a plurality of primitives to be displayed on the display unit 42. The primitive may include one or more lines (including curves, splines, or the like.), points, circles, ellipses, polygons (a polygon is usually defined as a set of one or more triangles), or any other two-dimensional (2D) primitive. The term "primitive" may alternatively refer to a three-dimensional (3D) primitive, for example, a cube, a cylinder, a sphere, a cone, a pyramid, or a ring. In general, the term "primitive" refers to any geometric shape or element rendered by the GPU 36 for display by the display unit 42 as an image (or a frame in context of video data).

The GPU 36 may transform the primitive or other state data of the primitive (for example, texture, brightness, camera configuration, or other aspects of the primitive are defined by the state data) into so-called "world space" by applying one or more models for transformations (which may also be specified in the state data). Once the transformation is performed, the GPU 36 may apply a view transform of an active camera (which may also be specified in state data defining the camera) to transform coordinates of the primitive and light into the camera or eye space. The GPU 36 may also perform vertex shading to render appearance of the primitive in a view of any valid light. The GPU 36 may perform vertex shading in one or more of the model, the world space, or the view space described above (although vertex shading is typically performed in the world space).

Once the primitives are colored, the GPU 36 may perform projection to project an image (as an example) into a unit cube with poles at (-1, -1, -1) and (1, 1, 1). This unit cube is usually referred to as a typical view body. After transforming the model from the eye space to the typical view body, the GPU 36 may perform cropping to remove any primitive that does not at least partially reside in the view body. In other words, the GPU 36 may remove any primitive that is not in a camera frame. The GPU 36 may then map the coordinates of the primitive from the view body to screen space, to effectively reduce 3D primitives of the primitive to obtain 2D coordinates on a screen.

When a transformed and projected vertex of the primitive that is defined by using associated shading data of the primitive, is specified, the GPU 36 may then rasterize the primitive. For example, the GPU 36 may calculate and set colors of pixels of the screen covered by the primitive. During rasterization is performed, the GPU 36 may apply any texture associated with the primitive (the texture may include state data). The GPU 36 may also perform a Z-buffer algorithm (also referred to as depth testing) during rasterization to determine whether any primitive and/or object are/is masked by any other object. The Z-buffer algorithm sorts the primitives based on depths of the primitives so that the GPU 36 determines a sequence in which the primitives are drawn to the screen. The GPU 36 outputs rendered pixels to the display buffer unit 44.

The display buffer unit 44 may temporarily store the rendered pixels of the image in rendering until the entire image is rendered. In this context, the display buffer unit 44 may be considered as an image frame buffer. The display buffer unit 44 may then transmit the rendered image to be displayed on the display unit 42. In some alternative examples, the GPU 36 may directly output a rendered portion of the image to the display unit 42 for display, instead of temporarily storing the image in the display buffer unit 44. The display unit 42 may then display the image stored in the display buffer unit 78.

The following describes some concepts in embodiments of this application.
(1) Texture: indicates one or more two-dimensional graphics that indicate details of an object surface, also referred to as texture mapping (texture mapping). When the texture is mapped to the object surface in a specific manner, the object can look more realistic.
(2) RenderBuffer: a memory buffer, that is, for storing a series of bytes, integers, and pixels. All rendering data can be directly stored in RenderBuffer without any format conversion of the data.
(3) Render Target: In the field of computer 3D graphics, the render target is a function of a modern graphics processing unit (GPU) to allow a 3D scene to be rendered to an intermediate memory buffer RenderBuffer or a render target texture (Render Target Texture) instead of frame buffer or background buffer. Then, Render Target Texture can be processed by using a pixel shader to apply an additional effect to a final image before the final image is displayed.
(4) Render Target Format: For the render target format, the format describes how many bits are allocated to each pixel and how the pixels are divided between red, green, blue, and alpha transparency. For example, in RGBA8, 32 bits are allocated to each pixel, and red, green, blue, and alpha each occupy 8 bits. Render Target Format is referred to as Render Format for short, or a render format.
(5) RenderPass: The render pass usually refers to a multi-pass rendering technology. In the multi-pass rendering technology, an object needs to be rendered a plurality of times, and results of rendering processes are accumulated to a final presentation result.
(6) Graphics application programming interface (application programming interface, API): indicates a graphics rendering programming interface, and a game engine renders a 3D scene on a screen by invoking the graphics API. Most widely used graphics APIs on mobile platforms include OpenGL ES and Vulkan. OpenGL ES is a conventional graphics API, and Vulkan is a new graphics API.

The following describes in detail a method for selecting a render format according to an embodiment of this application.

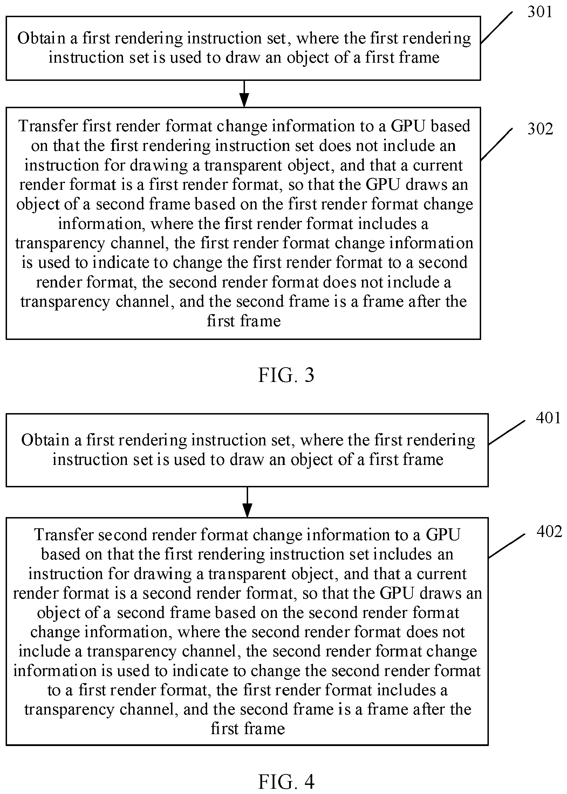

FIG. 3 is a schematic flowchart of a method for selecting a render format according to an embodiment of this application. As shown in FIG. 3, the method for selecting a render format provided in this embodiment of this application includes the following steps.

301: Obtain a first rendering instruction set, where the first rendering instruction set is used to draw an object of a first frame.

In this embodiment of this application, when a game is started, a processor may obtain rendering instructions of each frame in the game, and the first rendering instruction set includes rendering instructions of one frame (the first frame). Specifically, the processor may obtain a main scene drawing instruction of the first frame in the game.

302: Transfer first render format change information to a GPU based on that the first rendering instruction set does not include an instruction for drawing a transparent object, and that a current render format is a first render format, so that the GPU draws an object of a second frame based on the first render format change information, where the first render format includes a transparency channel, the first render format change information is used to indicate to change the first render format to a second render format, the second render format does not include a transparency channel, and the second frame is a frame after the first frame.

In a possible implementation, the current render format is the first render format, and the first render format may include an R channel, a G channel, a B channel, and an A channel. For example, the first render format may be RGBA8 or RGBA16F.

In a possible implementation, a transparent feature of a rendering instruction in the first rendering instruction set may be detected. If the first rendering instruction set does not include the instruction for drawing a transparent object, it may be considered that rendering of a transparent object does not need to be performed currently, and a render format that includes a transparency channel does not need to be included. On the contrary, if rendering is performed by using a render format that includes a transparency channel, DDR overheads during rendering task execution are increased without increasing image quality.

For example, the transparent feature of the rendering instruction in the first rendering instruction set may be determined based on the following instruction feature. For example, whether an instruction such as Disable(GL_BLEND) exists in a main scenario RenderPass instruction is determined, so that whether to draw a transparent object is determined. A decision result is made based on feature information. For example, if Disable(GL_BLEND) is invoked for a frame N (that is, the first frame), it may be considered that the first rendering instruction set does not include the instruction for drawing a transparent object.

In this embodiment of this application, a transparent feature of a rendering instruction of the first frame is used as a reference for selecting a render format of the second frame. When the first rendering instruction set does not include the instruction for drawing a transparent object, it may be considered that a transparent object does not need to be rendered in the second frame. However, when the current render format is the first render format (which includes a transparency channel). If the second frame is still rendered based on the first render format, unnecessary DDR overheads are increased.

Therefore, when the second frame is rendered, a second render format that does not include a transparency channel needs to be used. For example, the second render format may be R11G11B10F.

In a possible implementation, a CPU needs to transfer, to the GPU, the first render format change information that indicates to change the first render format to the second render format, so that a render format used when the GPU renders the second frame is changed from the first render format to the second render format.

In a possible implementation, the second frame is the frame after the first frame.

For example, the CPU may detect a render format and a transparent feature of the frame N (that is, the foregoing first frame), so that whether to draw a transparent object is determined based on the transparent feature based on the following instruction feature, for example, whether an instruction such as Disable/Enable (GL_BLEND), BlendEquation or BlendFunc exists in the main scenario RenderPass instruction. A decision result is made based on feature information. For example, if the frame N invokes Disable(GL_BLEND) and the render format is RGBA16F, a decision for dynamically switching a render format of a frame N+1 (that is, the foregoing second frame) is made, and the RGBA16F format is switched to the R11G11B10 format. The frame N+1 is drawn based on the new R11G11B10 render format.

An embodiment of this application provides a method for selecting a render format. The method includes: obtaining a first rendering instruction set, where the first rendering instruction set is used to draw an object of a first frame; and transferring first render format change information to a GPU based on that the first rendering instruction set does not includes an instruction for drawing a transparent object, and that a current render format is a first render format, so that the GPU draws an object of a second frame based on the first render format change information, where the first render format includes a transparency channel, the first render format change information is used to indicate to change the first render format to a second render format, the second render format does not includes a transparency channel, and the second frame is a frame after the first frame. A transparent feature of a rendering instruction of the first frame is used as a reference for selecting a render format of the second frame. When the first rendering instruction set does not include the instruction for drawing a transparent object, it may be considered that a transparent object does not need to be rendered in the second frame. However, when the current render format is the first render format (which includes a transparency channel). If the second frame is still rendered based on the first render format, unnecessary DDR overheads are increased. Therefore, when the second frame is rendered, the GPU may use the second render format that does not include a transparency channel, to reduce DDR overheads.

FIG. 4 is a schematic flowchart of a method for selecting a render format according to an embodiment of this application. As shown in FIG. 4, the method for selecting a render format provided in this embodiment of this application includes the following steps.

401: Obtain a first rendering instruction set, where the first rendering instruction set is used to draw an object of a first frame.

In this embodiment of this application, when a game is started, a processor may obtain rendering instructions of each frame in the game, and the first rendering instruction set includes rendering instructions of one frame (the first frame). Specifically, the processor may obtain a main scene drawing instruction of the first frame in the game.

402: Transfer second render format change information to a GPU based on that the first rendering instruction set includes an instruction for drawing a transparent object, and that a current render format is a second render format, so that the GPU draws an object of a second frame based on the second render format change information, where the second render format does not include a transparency channel, the second render format change information is used to indicate to change the second render format to a first render format, the first render format includes a transparency channel, and the second frame is a frame after the first frame.

In a possible implementation, the current render format is the second render format, the second render format does not include a transparency channel, and the second render format may include an R channel, a G channel, and a B channel. For example, the second render format may beR11G11B10F.

In a possible implementation, a transparent feature of a rendering instruction in the first rendering instruction set may be detected. If the first rendering instruction set includes the instruction for drawing a transparent object, it may be considered that rendering of a transparent object needs to be performed currently, and a render format that includes a transparency channel also needs to be included. On the contrary, if a render format that does not include a transparency channel is used for rendering, image quality of rendering is greatly reduced.

For example, the transparent feature of the rendering instruction in the first rendering instruction set may be determined based on the following instruction feature. For example, whether an instruction such as Enable (GL_BLEND), BlendEquation or BlendFunc exists in a main scenario RenderPass instruction is determined, so that whether to draw a transparent object is determined. A decision result is made based on feature information. For example, if Enable (GL_BLEND) is invoked for a frame N (that is, the first frame), it may be considered that the first rendering instruction set includes an instruction for drawing a transparent object.

In this embodiment of this application, a transparent feature of a rendering instruction of the first frame is used as a reference for selecting a render format of the second frame. When the first rendering instruction set includes the instruction for drawing a transparent object, it may be considered that a transparent object needs to be rendered in the second frame. However, when the current render format is the second render format (which does not include a transparency channel). If the second frame is still rendered based on the second render format, rendered image quality is greatly reduced.

Therefore, when the second frame is rendered, the first render format that includes a transparency channel needs to be used, and the first render format may include an R channel, a G channel, a B channel, and an A channel. For example, the first render format may be RGBA8 or RGBA16F.

In a possible implementation, the CPU needs to transfer, to the GPU, the second render format change information that indicates to change the second render format to the first render format, so that a render format used when the GPU renders the second frame is changed from the second render format to the first render format.

In a possible implementation, the second frame is the frame after the first frame.

For example, the CPU may detect a render format and a transparent feature of the frame N (that is, the foregoing first frame), so that whether to draw a transparent object is determined based on the transparent feature based on the following instruction feature, for example, whether an instruction such as Disable/Enable (GL_BLEND), BlendEquation or BlendFunc exists in the main scenario RenderPass instruction. A decision result is made based on feature information. For example, if the frame N invokes Enable (GL_BLEND) and the render format is R11G11B10, a decision for dynamically switching a render format of a frame N+1 (that is, the second frame) is made, and the R11G11B10 is switched to the RGBA16F format. The frame N+1 is drawn based on the new RGBA16F render format.

An embodiment of this application provides a method for selecting a render format. The method is applied to a terminal device, the terminal device includes a graphics processing unit GPU, and the method includes: obtaining a first rendering instruction set, where the first rendering instruction set is used to draw an object of a first frame; and transferring second render format change information to the GPU based on that the first rendering instruction set includes an instruction for drawing a transparent object, and that a current render format is a second render format, so that the GPU draws an object of a second frame based on the second render format change information, where the second render format does not include a transparency channel, the second render format change information is used to indicate to change the second render format to a first render format, the first render format includes a transparency channel, and the second frame is a frame after the first frame. A transparent feature of a rendering instruction of the first frame is used as a reference for selecting a render format of the second frame. When the first rendering instruction set includes the instruction for drawing a transparent object, it may be considered that a transparent object needs to be rendered in the second frame. However, when the current render format is the second render format (which does not include a transparency channel). If the second frame is still rendered based on the second render format, rendered image quality is greatly reduced. Therefore, in this application, when the second frame is rendered, the first render format that includes a transparency channel needs to be used, so that image quality of rendering can be improved.

It should be understood that there is a difference in pixel value representation precision between different render formats that include a transparency channel. For example, 32 bits are allocated to each pixel in RGBA8, and red, green, and blue and transparency each occupy 8 bits; and 64 bits are allocated to each pixel in RGBA16F, and red, green, and blue and transparency each occupy 16 bits. That is, a pixel value representation precision supported by RGBA16F is greater than a pixel value representation precision supported by RGBA8.

In a possible implementation, there may be a case in which a pixel value representation precision required by rendered image quality is higher than a pixel value representation precision supported by the current render format. In this case, the render format needs to be changed to a render format that supports a higher pixel value representation precision, to improve rendered image quality.

In a possible implementation, a drawing result of the second frame may be obtained. The drawing result may include a value of each channel of each pixel in a rendering interface, or a rendering interface may be divided into a plurality of tile areas (for details, refer to FIG. 5), and the drawing result may include a value of each channel of one or more pixels (for example, a central point) in each tile in the rendering interface. The CPU may determine, based on the rendering result, whether the current render format meets a pixel value representation precision required by the second frame. Specifically, it may be determined, based on the drawing result, whether there is a pixel whose pixel value is equal to a pixel value representation precision upper limit. If there is a pixel (or there are a plurality of pixels) whose pixel value is equal to the pixel value representation precision upper limit, it may be considered that the drawing result indicates that the second frame includes a pixel whose required pixel value representation precision exceeds a pixel value representation precision upper limit supported by the first render format.

In a possible implementation, third render format change information may be transferred to the GPU if the drawing result indicates that the second frame includes a pixel whose required pixel value representation precision exceeds a pixel value representation precision upper limit supported by the first render format, so that the GPU draws an object of a third frame based on the third render format change information, where the third render format change information is used to indicate to change the first render format to a third render format, a pixel value representation precision upper limit supported by the third render format is greater than the pixel value representation precision upper limit supported by the first render format, and the third frame is a frame after the second frame.

In a possible implementation, the second render format is RGBA8, and the third render format is RGBA16F.

For example, RGBA8 may be switched to RGBA16F, and the frame N is mapped to the Render Buffer. For example, 1920*1080 Render Buffer is divided into 253 tiles of 128*64, and a center value of each tile is read from a GPU memory, and whether the value is equal to 255 is determined. If there are a plurality of values equal to 255, it is considered that there is a highlight area, and the RGBA8 render format cannot meet an image quality rendering requirement, and RGBA8 needs to be switched to RGBA16F.

In a possible implementation, there may be a case in which a pixel value representation precision required by rendered image quality is lower than a pixel value representation precision supported by the current render format. In this case, the render format needs to be changed to a render format that supports a lower pixel value representation precision, to reduce DDR overheads.

In a possible implementation, the method includes: obtaining a drawing result of the second frame; and transferring fourth render format change information to the GPU based on that the drawing result indicates that the second frame does not includes a pixel whose required pixel value representation precision exceeds a pixel value representation precision upper limit supported by the first render format, so that the GPU draws an object of a third frame based on the fourth render format change information, where the fourth render format change information is used to indicate to change the first render format to a fourth render format, a pixel value representation precision upper limit supported by the fourth render format is less than the pixel value representation precision upper limit supported by the first render format, and the third frame is a frame after the second frame.

In a possible implementation, the third render format is RGBA16F, and the second render format is RGBA8.

For example, switching from RGBA16F to RGBA8 is used as an example. A frame N is mapped to Render Buffer, for example, 1920*1080 Render Buffer, and is divided into 253 tiles of 128*64. A center value of each tile is read. As shown in FIG. 5, it is determined whether the values are all less than 1.0 (a result obtained after normalization). If the values are all less than 1.0, RGBA16F is lowered to RGBA8.

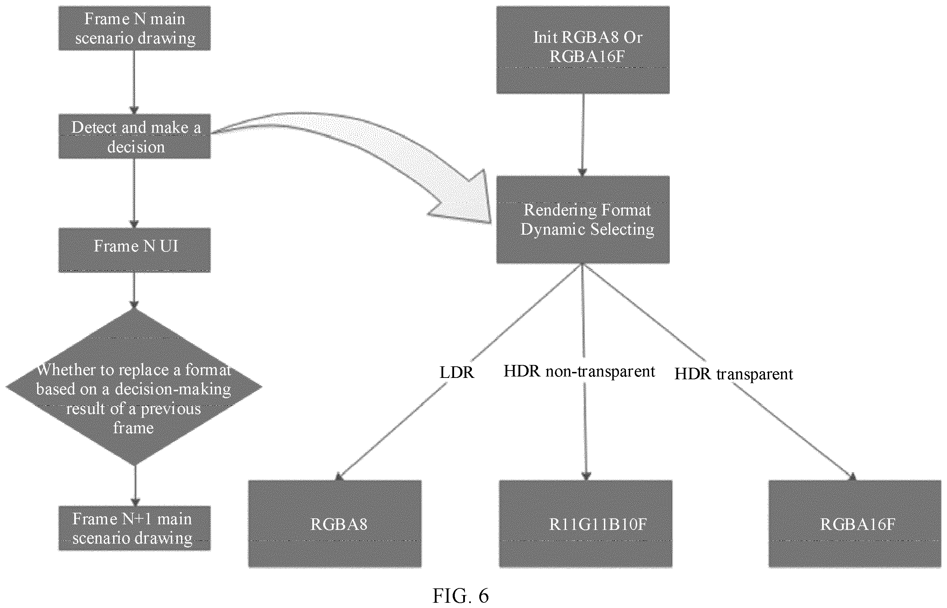

For an application procedure in this embodiment of this application, refer to FIG. 6.

Based on performance test data of a top game, in the solution of this embodiment of this application, an average frame rate is increased from 40.65 FPS to 53.16 FPS, and a frame rate is increased by 12.51 FPS; power consumption is reduced from 1636.7 mA to 1591.86 mA, and power consumption is reduced by 44.54 mA; a quantity of freeze times per hour is reduced from 206 to 179, and a worst frame loss rate remains unchanged; and single-frame power is reduced from 40.26 mA to 29.94 mA, and single-frame power consumption is reduced by 10.32 mA.

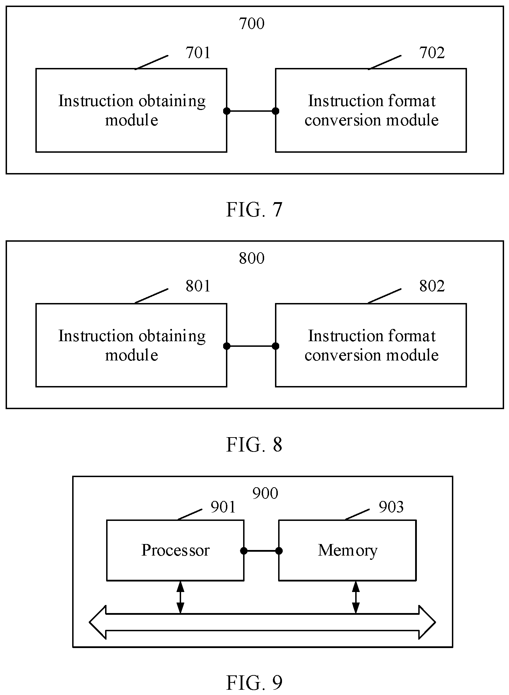

FIG. 7 is a schematic diagram of a structure of an apparatus for selecting a render format according to this application. As shown in FIG. 7, the apparatus 700 may be applied to a terminal device, the terminal device includes a graphics processing unit GPU, and the apparatus 700 includes:
an instruction obtaining module 701, configured to obtain a first rendering instruction set, where the first rendering instruction set is used to draw an object of a first frame.

For description of the instruction obtaining module 701, refer to the description of step 301 in the foregoing embodiment. Details are not described herein again.

The apparatus 700 further includes: an instruction format conversion module 702, configured to: transfer first render format change information to the GPU based on that the first rendering instruction set does not include an instruction for drawing a transparent object, and that a current render format is a first render format, so that the GPU draws an object of a second frame based on the first render format change information, where the first render format includes a transparency channel, the first render format change information is used to indicate to change the first render format to a second render format, the second render format does not include a transparency channel, and the second frame is a frame after the first frame.

For description of the instruction format conversion module 702, refer to the description of step 302 in the foregoing embodiment, and details are not described herein again.

In a possible implementation, the first render format includes an R channel, a G channel, a B channel, and an A channel, and the second render format includes an R channel, a G channel, and a B channel.

In a possible implementation, the first render format is RGBA8 or RGBA16F, and the second render format is R11G11B10F.

In a possible implementation, the second frame is the frame after the first frame.

FIG. 8 is a schematic diagram of a structure of an apparatus for selecting a render format according to this application. As shown in FIG. 8, the apparatus 800 may be applied to a terminal device, the terminal device includes a graphics processing unit GPU, and the apparatus 800 includes:
an instruction obtaining module 801, configured to obtain a first rendering instruction set, where the first rendering instruction set is used to draw an object of a first frame.

For description of the instruction obtaining module 801, refer to the description of step 401 in the foregoing embodiment. Details are not described herein again.

The apparatus 800 further includes: an instruction format conversion module 802, configured to transfer second render format change information to the GPU based on that the first rendering instruction set includes an instruction for drawing a transparent object, and that a current render format is a second render format, so that the GPU draws an object of a second frame based on the second render format change information, where the second render format does not include a transparency channel, the second render format change information is used to indicate to change the second render format to a first render format, the first render format includes a transparency channel, and the second frame is a frame after the first frame.

For description of the instruction format conversion module 802, refer to the description of step 402 in the foregoing embodiment, and details are not described herein again.

In a possible implementation, the first render format includes an R channel, a G channel, a B channel, and an A channel, and the second render format includes an R channel, a G channel, and a B channel.

In a possible implementation, the first render format is RGBA8 or RGBA16F, and the second render format is R11G11B10F.

In a possible implementation, the instruction obtaining module is further configured to obtain a drawing result of the second frame; and
the instruction format conversion module is further configured to: transfer third render format change information to the GPU based on that the drawing result indicates that the second frame includes a pixel whose required pixel value representation precision exceeds a pixel value representation precision upper limit supported by the first render format, so that the GPU draws an object of a third frame based on the third render format change information, where the third render format change information is used to indicate to change the first render format to a third render format, a pixel value representation precision upper limit supported by the third render format is greater than the pixel value representation precision upper limit supported by the first render format, and the third frame is a frame after the second frame.

In a possible implementation, the second render format is RGBA8, and the third render format is RGBA16F.

In a possible implementation, the instruction obtaining module is further configured to obtain a drawing result of the second frame; and
the instruction format conversion module is further configured to transfer fourth render format change information to the GPU based on that the drawing result indicates that the second frame does not include a pixel whose required pixel value representation precision exceeds a pixel value representation precision upper limit supported by the first render format, so that the GPU draws an object of a third frame based on the fourth render format change information, where the fourth render format change information is used to indicate to change the first render format to a fourth render format, a pixel value representation precision upper limit supported by the fourth render format is less than the pixel value representation precision upper limit supported by the first render format, and the third frame is a frame after the second frame.

In a possible implementation, the third render format is RGBA16F, and the second render format is RGBA8.

FIG. 9 is a schematic diagram of a structure of terminal device 900 according to this application. As shown in FIG. 9, the terminal device includes a processor 901 and a memory 903. The processor 901 includes a central processing unit CPU and a graphics processing unit GPU. The CPU is configured to obtain code of the memory to execute the following steps:
obtaining a first rendering instruction set, where the first rendering instruction set is used to draw an object of a first frame; and
transferring first render format change information to the GPU based on that the first rendering instruction set does not include an instruction for drawing a transparent object, and that a current render format is a first render format, so that the GPU draws an object of a second frame based on the first render format change information, where the first render format includes a transparency channel, the first render format change information is used to indicate to change the first render format to a second render format, the second render format does not include a transparency channel; and the second frame is a frame after the first frame.

In a possible implementation, the first render format includes an R channel, a G channel, a B channel, and an A channel, and the second render format includes an R channel, a G channel, and a B channel.

In a possible implementation, the first render format is RGBA8 or RGBA16F, and the second render format is R11G11B10F.

In a possible implementation, the second frame is the frame after the first frame.

The CPU is configured to obtain code of the memory to execute the following steps:
obtaining a first rendering instruction set, where the first rendering instruction set is used to draw an object of a first frame; and
transferring second render format change information to the GPU based on that the first rendering instruction set includes an instruction for drawing a transparent object, and that a current render format is a second render format, so that the GPU draws an object of a second frame based on the second render format change information, where the second render format does not include a transparency channel, the second render format change information is used to indicate to change the second render format to a first render format, the first render format includes a transparency channel, and the second frame is a frame after the first frame.

In a possible implementation, the first render format includes an R channel, a G channel, a B channel, and an A channel, and the second render format includes an R channel, a G channel, and a B channel.

In a possible implementation, the first render format is RGBA8 or RGBA16F, and the second render format is R11G11B10F.

In a possible implementation, the method further includes:
obtaining a drawing result of the second frame; and
transferring third render format change information to the GPU based on that the drawing result indicates that the second frame includes a pixel whose required pixel value representation precision exceeds a pixel value representation precision upper limit supported by the first render format, so that the GPU draws an object of a third frame based on the third render format change information, where the third render format change information is used to indicate to change the first render format to a third render format, a pixel value representation precision upper limit supported by the third render format is greater than the pixel value representation precision upper limit supported by the first render format, and the third frame is a frame after the second frame.

In a possible implementation, the second render format is RGBA8, and the third render format is RGBA16F.

In a possible implementation, the method further includes:
obtaining a drawing result of the second frame; and
transferring fourth render format change information to the GPU based on that the drawing result indicates that the second frame does not include a pixel whose required pixel value representation precision exceeds a pixel value representation precision upper limit supported by the first render format, so that the GPU draws an object of a third frame based on the fourth render format change information, where the fourth render format change information is used to indicate to change the first render format to a fourth render format, a pixel value representation precision upper limit supported by the fourth render format is less than the pixel value representation precision upper limit supported by the first render format, and the third frame is a frame after the second frame.

In a possible implementation, the third render format is RGBA16F, and the second render format is RGBA8.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it can be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, that is, may be located in one position, or may be distributed on a plurality of network units. Some or all of the units may be selected depending on actual requirements to achieve the objectives of the solutions in the embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium, and includes several instructions for indicating a computer device (which may be a personal computer, a server, or another network device) to perform all or a part of the steps of the methods described in the embodiment of this application shown in FIG. 3. The foregoing storage medium includes: any medium that can store program code, such as a USB flash drive, a removable hard disk, a read-only memory (read-only memory, ROM), a random access memory (random access memory, RAM), a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A method for selecting a render format, wherein the method is applied to a terminal device, the terminal device comprises a graphics processing unit GPU, and the method comprises:
obtaining a first rendering instruction set, wherein the first rendering instruction set is used to draw an object of a first frame; and
transferring first render format change information to the GPU based on that the first rendering instruction set does not comprise an instruction for drawing a transparent object, and that a current render format is a first render format, so that the GPU draws an object of a second frame based on the first render format change information, wherein the first render format comprises a transparency channel, the first render format change information is used to indicate to change the first render format to a second render format, the second render format does not comprise a transparency channel, and the second frame is a frame after the first frame.

2. The method according to claim 1, wherein the first render format comprises an R channel, a G channel, a B channel, and an A channel, and the second render format comprises an R channel, a G channel, and a B channel.

3. The method according to claim 1 or 2, wherein the first render format is RGBA8 or RGBA16F, and the second render format is R11G11B10F.

4. The method according to any one of claims 1 to 3, wherein the second frame is an adjacent frame after the first frame.

5. A method for selecting a render format, wherein the method is applied to a terminal device, the terminal device comprises a graphics processing unit GPU, and the method comprises:
obtaining a first rendering instruction set, wherein the first rendering instruction set is used to draw an object of a first frame; and
transferring second render format change information to the GPU based on that the first rendering instruction set comprises an instruction for drawing a transparent object, and that a current render format is a second render format, so that the GPU draws an object of a second frame based on the second render format change information, wherein the second render format does not comprise a transparency channel, the second render format change information is used to indicate to change the second render format to a first render format, the first render format comprises a transparency channel, and the second frame is a frame after the first frame.

6. The method according to claim 5, wherein the first render format comprises an R channel, a G channel, a B channel, and an A channel, and the second render format comprises an R channel, a G channel, and a B channel.

7. The method according to claim 5 or 6, wherein the first render format is RGBA8 or RGBA16F, and the second render format is R11G11B10F.

8. The method according to any one of claims 5 to 7, wherein the method further comprises:
obtaining a drawing result of the second frame; and
transferring third render format change information to the GPU based on that the drawing result indicates that the second frame comprises a pixel whose required pixel value representation precision exceeds a pixel value representation precision upper limit supported by the first render format, so that the GPU draws an object of a third frame based on the third render format change information, wherein the third render format change information is used to indicate to change the first render format to a third render format, a pixel value representation precision upper limit supported by the third render format is greater than the pixel value representation precision upper limit supported by the first render format, and the third frame is a frame after the second frame.

9. The method according to claim 8, wherein the second render format is RGBA8, and the third render format is RGBA16F.

10. The method according to any one of claims 5 to 7, wherein the method further comprises:
obtaining a drawing result of the second frame; and
transferring fourth render format change information to the GPU based on that the drawing result indicates that the second frame does not comprise a pixel whose required pixel value representation precision exceeds a pixel value representation precision upper limit supported by the first render format, so that the GPU draws an object of a third frame based on the fourth render format change information, wherein the fourth render format change information is used to indicate to change the first render format to a fourth render format, a pixel value representation precision upper limit supported by the fourth render format is less than the pixel value representation precision upper limit supported by the first render format, and the third frame is a frame after the second frame.

11. The method according to claim 10, wherein the third render format is RGBA16F, and the second render format is RGBA8.

12. An apparatus for selecting a render format, wherein the apparatus is applied to a terminal device, the terminal device comprises a graphics processing unit GPU, and the apparatus comprises:
an instruction obtaining module, configured to obtain a first rendering instruction set, wherein the first rendering instruction set is used to draw an object of a first frame; and
an instruction format conversion module, configured to transfer first render format change information to the GPU based on that the first rendering instruction set does not comprise an instruction for drawing a transparent object, and that a current render format is a first render format, so that the GPU draws an object of a second frame based on the first render format change information, wherein the first render format comprises a transparency channel, the first render format change information is used to indicate to change the first render format to a second render format, the second render format does not comprise a transparency channel, and the second frame is a frame after the first frame.

13. The apparatus according to claim 12, wherein the first render format comprises an R channel, a G channel, a B channel, and an A channel, and the second render format comprises an R channel, a G channel, and a B channel.

14. The apparatus according to claim 12 or 13, wherein the first render format is RGBA8 or RGBA16F, and the second render format is R11G11B10F.

15. The apparatus according to any one of claims 12 to 14, wherein the second frame is an adjacent frame after the first frame.

16. An apparatus for selecting a render format, wherein the apparatus is applied to a terminal device, the terminal device comprises a graphics processing unit GPU, and the apparatus comprises:
an instruction obtaining module, configured to obtain a first rendering instruction set, wherein the first rendering instruction set is used to draw an object of a first frame; and
an instruction format conversion module, configured to transfer second render format change information to the GPU based on that the first rendering instruction set comprises an instruction for drawing a transparent object, and that a current render format is a second render format, so that the GPU draws an object of a second frame based on the second render format change information, wherein the second render format does not comprise a transparency channel, the second render format change information is used to indicate to change the second render format to a first render format, the first render format comprises a transparency channel, and the second frame is a frame after the first frame.

17. The apparatus according to claim 16, wherein the first render format comprises an R channel, a G channel, a B channel, and an A channel, and the second render format comprises an R channel, a G channel, and a B channel.

18. The apparatus according to claim 16 or 17, wherein the first render format is RGBA8 or RGBA16F, and the second render format is R11G11B10F.

19. The apparatus according to any one of claims 16 to 18, wherein the instruction obtaining module is further configured to obtain a drawing result of the second frame; and
the instruction format conversion module is further configured to: transfer third render format change information to the GPU based on that the drawing result indicates that the second frame comprises a pixel whose required pixel value representation precision exceeds a pixel value representation precision upper limit supported by the first render format, so that the GPU draws an object of a third frame based on the third render format change information, wherein the third render format change information is used to indicate to change the first render format to a third render format, a pixel value representation precision upper limit supported by the third render format is greater than the pixel value representation precision upper limit supported by the first render format, and the third frame is a frame after the second frame.

20. The apparatus according to claim 19, wherein the second render format is RGBA8, and the third render format is RGBA16F.

21. The apparatus according to any one of claims 16 to 18, wherein the instruction obtaining module is further configured to obtain a drawing result of the second frame; and
the instruction format conversion module is further configured to transfer fourth render format change information to the GPU based on that the drawing result indicates that the second frame does not comprise a pixel whose required pixel value representation precision exceeds a pixel value representation precision upper limit supported by the first render format, so that the GPU draws an object of a third frame based on the fourth render format change information, wherein the fourth render format change information is used to indicate to change the first render format to a fourth render format, a pixel value representation precision upper limit supported by the fourth render format is less than the pixel value representation precision upper limit supported by the first render format, and the third frame is a frame after the second frame.

22. The apparatus according to claim 21, wherein the third render format is RGBA16F, and the second render format is RGBA8.

23. A non-volatile computer-readable storage medium, wherein the non-volatile computer-readable storage medium comprises computer instructions used to perform the method for selecting a render format according to any one of claims 1 to 11.

24. A computing device, wherein the computing device comprises a memory and a processor, the memory stores code, and the processor is configured to obtain the code to perform the method for selecting a render format according to any one of claims 1 to 11.

25. A computer program product, comprising computer-readable instructions, wherein when the computer-readable instructions are run on a computer device, the computer device is enabled to perform the method according to any one of claims 1 to 11.
